# EUROPEAN PATENT SPECIFICATION

(11) **EP 0 363 857 B1**
(45) Date of publication and mention of the grant of the patent: **21.12.1994**
(21) Application number: 89118664.5
(22) Date of filing: 07.10.1989
(51) Int. Cl.: C08G 59/04

(54) **Process for preparation of aliphatic, non-hydrolyzable chloride-containing epoxy resins**
Verfahren zur Herstellung von Epoxyharzen, die aliphatisches, nicht hydrolysierbares Chlorid enthalten
Procédé pour la préparation des résines époxydes, contenant du chlorure aliphatique, pas hydolysable

(30) Priority: 14.10.1988 US 258250
(43) Date of publication of application: 18.04.1990
(73) Proprietor: THE DOW CHEMICAL COMPANY, Midland Michigan 48640-1967 (US)
(72) Inventor: Shirtum, Robert P., Freeport Texas 77541 (US); Wernli, Walter L., Angleton Texas 77515 (US)
(74) Representative: Sternagel, Hans-Günther, Dr.

(56) References cited:
- GB-A- 870 365
- US-A- 3 206 482
- US-A- 4 273 921

## Description

The present invention concerns a process for preparing epoxy resins containing aliphatic, non-hydrolyzable chloride and epoxy resins prepared therefrom and mixtures containing the epoxy resins.

For some applications, especially for some coating formulations, it is desirable to employ epoxy resins having from 0.2 to 10 percent by weight of non-hydrolyzable, aliphatic chlorine atoms. Such applications include, for example, blending with other epoxy resins which contain very low or zero concentrations of non-hydrolyzable, aliphatic chlorine atoms so as to obtain a resin containing a specific amount of non-hydrolyzable, aliphatic chlorine atoms. Since some manufacturing facilities for producing relatively low molecular weight epoxy resins from a bisphenol and an epihalohydrin are operated so as to produce epoxy resins having hydrolyzable and non-hydrolyzable, aliphatic chloride contents as low as possible, these resins are therefore not particularly suited for the aforementioned applications. Therefore, it would be desirable to have available epoxy resins containing relatively high amounts, e.g., from 0.2 to 10 percent by weight of aliphatic, non-hydrolyzable aliphatic chlorine atoms and a process for producing these resins. These resins can then be blended with the relatively low non-hydrolyzable, aliphatic chloride-containing resins so as to result in an epoxy resin having the desired amount of non-hydrolyzable aliphatic chloride.

The present invention pertains to a process for the preparation of an epoxy resin having aliphatic, non-hydrolyzable chloride which process comprises
(1) hydrochlorinating an epoxy resin having no aliphatic, non-hydrolyzable chloride with a hydrochlorinating agent in the presence of one or more non-reactive solvents thereby producing a first chlorohydrin intermediate product;
(2) reacting the resultant chlorohydrin product from step (1) with an epichlorohydrin in the presence of one or more Lewis acid catalysts and in the presence of one or more non-reactive solvents thereby producing a second chlorohydrin intermediate product;
(3) recovering the second chlorohydrin intermediate product formed in step (2), dissolving the recovered second chlorohydrin intermediate product in one or more non-reactive solvents, and dehydrochlorinating said second chlorohydrin intermediate product with one or more suitable dehydrochlorinating agents; and
(4) recovering the resultant aliphatic, non-hydrolyzable chlorine-containing epoxy resin product.

Suitable epoxy resins having no aliphatic, non-hydrolyzable chloride used in the present invention are represented by formula I or II or a combination thereof: 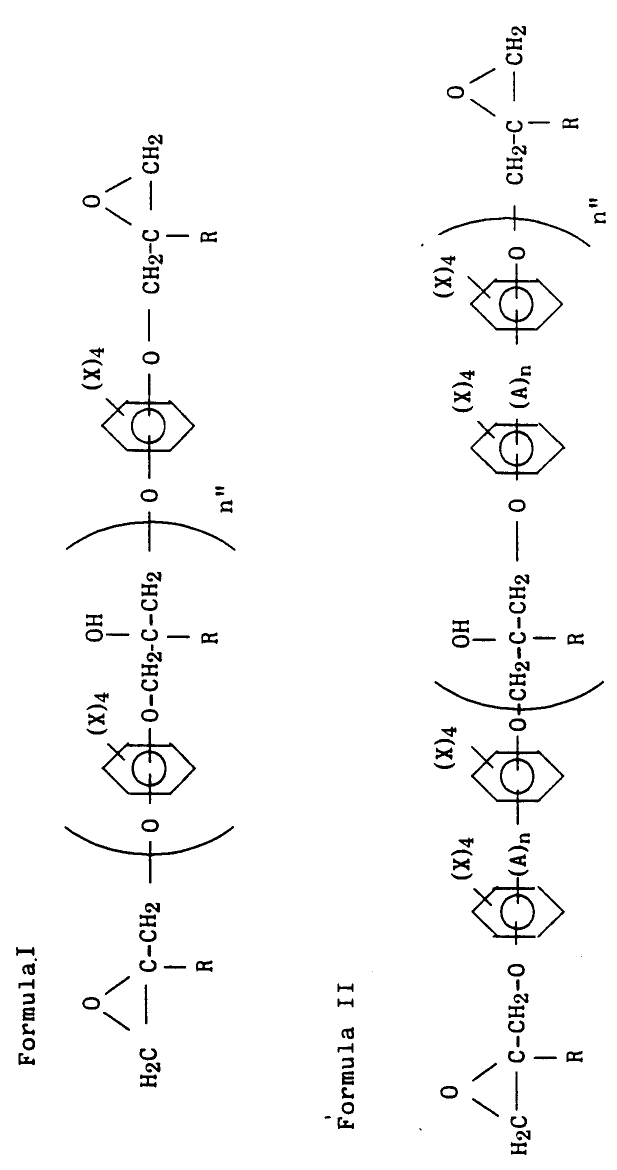
wherein each A is independently a divalent hydrocarbyl group having suitably from 1 to 12, more suitably from 1 to 6, most suitably from 1 to 4, carbon atoms, -O-, -S-, -S-S-, -SO-, -SO₂-, or -CO-; each R is independently hydrogen or an alkyl group hating from 1 to 3 carbon atoms; each X is independently hydrogen, a hydrocarbyl or hydrocarbyloxy group having suitably from 1 to 12, more suitably from 1 to 6, most suitably from 1 to 4, carbon atoms or a halogen atom, preferably chlorine or bromine; n has a value of zero or 1; n˝ has an average value from zero to 20, suitably from zero to 10, more suitably from zero to 5, most suitably from zero to 3.

Another aspect of the present invention pertains to an epoxy resin produced by the above process and represented by the following formulas III and IV 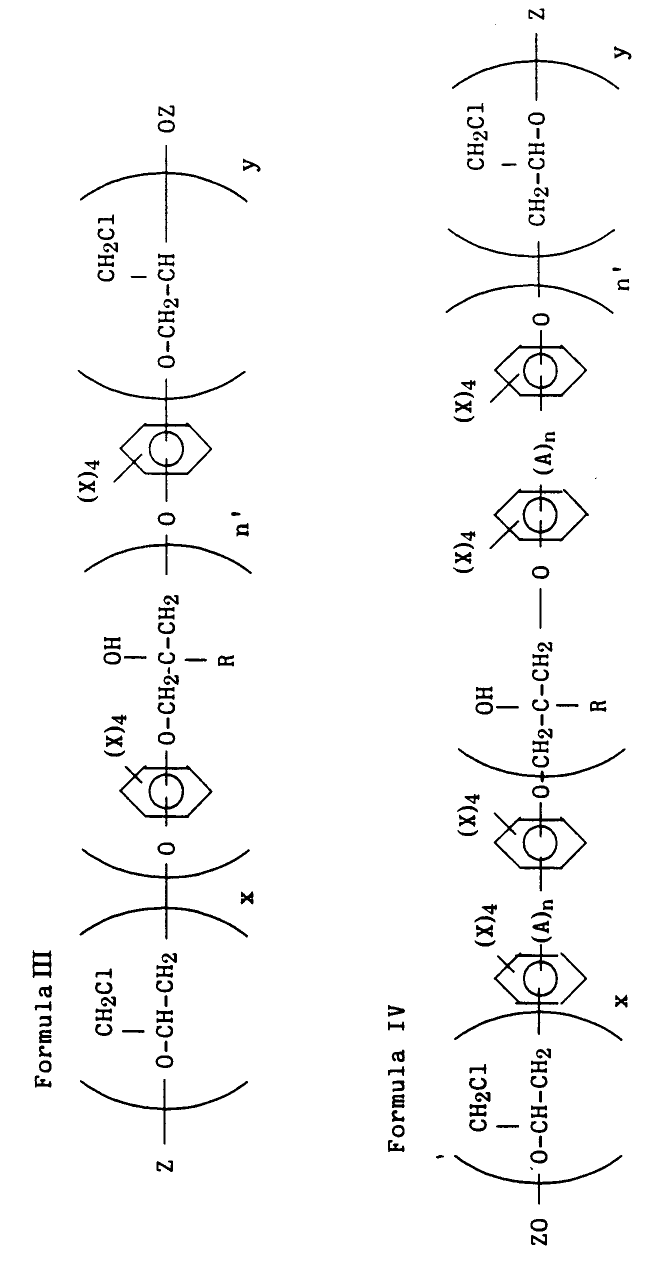
wherein A, R and X are as previously defined; Z is a group represented by the formula 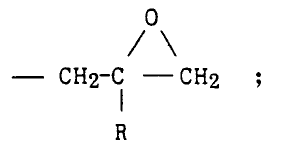
n has a value of zero or 1; n′ has an average value from zero to 20, suitably from zero to 10, more suitably from zero to 5, most suitably from zero to 3; and x and y each have a value of 1.

Another aspect of the present invention pertains to an epoxy resin mixture comprising
(A) an epoxy resin produced by the process of the present invention and represented by formulas III or IV; and
(B) an epoxy resin represented by formulas I or II wherein components (A) and (B) are present in quantities such that the mixture suitably contains from 0.2 to 10, more suitably from 0.2 to 8, most suitably from 0.2 to 3, percent aliphatic, non-hydrolyzable chloride by weight.

The term hydrocarbyl as employed herein means any aliphatic, cycloaliphatic, aromatic, aryl substituted aliphatic or cycloaliphatic, or aliphatic or cycloaliphatic substituted aromatic groups. The aliphatic groups can be saturated or unsaturated. Likewise, the term hydrocarbyloxy means a hydrocarbyl group having an oxygen linkage between it and the atom to which it is attached.

The hydrochlorination reaction in step (1) can be conducted at temperatures suitably from 0°C to 100°C, more suitably from 30°C to 80°C, most suitably from 50°C to 70°C. At temperatures below 0°C, the reaction rate is greatly diminished and incomplete conversion to chlorohydrin occurs. At temperatures above 100°C, a great portion of the HCl boils out of the reaction mixture before reaction can occur, thus causing incomplete reaction to chlorohydrin.

The hydrochlorination reaction can be conducted at pressures suitably from 0.6895 kPa (1 psia) to 6895 kPa (1000 psia), more suitably from 68.95 kPa (10 psia) to 689.5 kPa (100 psia), most suitably from 96.53 kPa (14 psia) to 37.9 kPa (20 psia). At pressures below 0.6895 kPa (1 psia), the chlorohydrin reaction slows down due to HCl boiling out of the reaction mixture before reaction takes place.

The hydrochlorination reaction can be conducted for a period of time suitably from 0.1 to 24, more suitably from 0.5 to 24, more suitably from 1 to 10, most suitably from 2 to 4, hours. Lower temperatures require longer reaction times whereas higher temperatures require shorter reaction times.

The hydrochlorination reaction can be conducted in the presence of such solvents as alcohols, aromatic hydrocarbons, aliphatic ethers, aromatic ethers, ketones, chlorinated aliphatic hydrocarbons, chlorinated aromatic hydrocarbons, and any combination thereof. Particularly suitable such solvents include, for example, methanol, ethanol, n-propanol, isopropanol, n-butanol, toluene, benzene, xylene, 2-methoxy-1-propanol, methoxy phenol, methylene chloride, 1,2-dichloropropane, dichlorobenzenes, dimethoxyethane, methyl isobutyl ketone, and any combination thereof.

Suitable hydrochlorinating agents include, for example, hydrogen chloride, concentrated aqueous hydrochloric acid, commercial bleaches, hypochlorous acid, and any combination thereof.

The first intermediate reaction product, the product resulting from the hydrochlorination reaction, can be recovered, if desired, from the reaction mixture prior to reacting it with epichlorohydrin by any suitable means such as vacuum stripping, rotary evaporation, and thin film evaporation.

In step (2), the first intermediate reaction product can be reacted with the epichlorohydrin in amounts suitably from 0.01 to 1, more suitably from 0.1 to 0.95, most suitably from 0.5 to 0.95 mole of epichlorohydrin per vicinal chlorohydrin group contained in the first intermediate product.

The epichlorohydrin and first intermediate product are reacted at temperatures suitably from 0°C to 100°C, more suitably from 20°C to 80°C, most suitably from 30°C to 50°C. At temperatures below 0°C, the reaction occurs slowly, until the exotherm takes over and then the reaction could be violent due to excess unreacted epichlorohydrin in the mixture. At temperatures above 100°C, the reaction is very fast, very exothermic and unless the temperature is below the boiling point of epichlorohydrin, epichlorohydrin is boiled out before reaction can occur.

The reaction between the epichlorohydrin and first intermediate product can be conducted at pressures suitably from 6.895 kPa (1 psia) to 6895 kPa (1000 psia), more suitably from 68.95 kPa (10 psia) to 689.5 kPa (100 psia), most suitably from 96.53 kPa (14 psia) to 137.9 kPa (20 psia). At pressures below 6.895 kPa (1 psia), epichlorohydrin boils out of the reaction mixture before reaction can occur.

The reaction between the epichlorohydrin and first intermediate product can be conducted for a period of time suitably from 0.5 to 24, more suitably from 1 to 12, most suitably from 1 to 4 hours. Lower temperatures require longer reaction times whereas higher temperatures require shorter reaction times.

The reaction between the epichlorohydrin and first intermediate product can be conducted in the presence of, as a catalyst, any Lewis acid such as, for example, stannic chloride, boron trifluoride etherate, boron trifluoride, stannous chloride, aluminum chloride, and any combination thereof.

The reaction between the epichlorohydrin and first intermediate product can be conducted in the presence of such solvents as alcohols, aromatic hydrocarbons, aliphatic ethers, aromatic ethers, polyethers, chlorinated aliphatic hydrocarbons, chlorinated aromatic hydrocarbons, ketones, and any combination thereof. Particularly suitable such solvents include, for example methanol, ethanol, n-propanol, isopropanol, n-butanol, toluene, benzene, xylene, 2-methoxy-1-propanol, dimethoxy ethane, methoxy benzene, 1,2-dichloropropane, methylene chloride, dichlorobenzenes, dimethoxypropanes, methyl isobutyl ketone, and any combination thereof.

The product resulting from reacting the epichlorohydrin and first intermediate product can be recovered, if desired, from the reaction mixture prior to dehydrochlorination by any suitable means such as vacuum stripping, rotary evaporation, and thin film evaporation.

In step (3), the product resulting from reacting the epichlorohydrin and first intermediate product can be dehydrochlorinated with any suitable dehydrochlorination agent such as any suitable basic-acting compound such as alkali metal hydroxides, alkaline earth metal hydroxides, alkali metal carbonates, alkaline earth metal carbonates, alkali metal bicarbonates, alkaline earth metal bicarbonates, and any combination thereof. Particularly suitable dehydrochlorination agents include, for example, sodium hydroxide, potassium hydroxide, lithium hydroxide, sodium bicarbonate, potassium bicarbonate, lithium bicarbonate, and any combination thereof.

The dehydrochlorination agent is employed in amounts which provide a ratio of moles of dehydrochlorination agent to moles of chlorohydrin suitably from 0.95:1 to 1.1:1, more suitably from 0.96:1 to 1:1, most suitably from 0.98:1 to 1:1. At ratios below 0.95:1, the hydrolyzable chlorine content rises above 500 parts per million which for many applications is unacceptable. At ratios above 1.1:1, oligomer coupling occurs which dramatically increases the viscosity of the product thus making it unsuitable or undesirable for many uses.

The dehydrochlorination reaction can be conducted at temperatures suitably from 10°C to 100°C, more suitably from 30°C to 90°C, most suitably from 60°C to 80°C. At temperatures below 10°C, the reaction is very slow, caustic solutions freeze upon contact with the "cold" reaction mixture and fallout as solids and may not participate in the dehydrochlorination reaction. At temperatures above 100°C, excess side reactions occur which produce undesirable by-products.

The dehydrochlorination reaction can be conducted at pressures suitably from 0.6895 kPa (0.1 psia) to 96.53 kPa (14 psia), more suitably from 6.895 kPa (1 psia) to 12 psia, most suitably from 13.79 kPa (2 psia) to 27.58 kPa (4 psia). At pressures below 0.6895 kPa (0.1 psia), reaction temperatures must be low to use 0.6895 kPa (0.1 psia) pressure and the reaction is slow. At pressures above 34.475 kPa (5 psia), too much residual water remains in the reaction mixture thus causing undesirable side reactions to occur which produces undesirable by-products.

The dehydrochlorination reaction can be conducted for a period of time suitably from 0.5 to 24, more suitably from 1 to 12, most suitably from 1 to 4, hours. Lower temperatures require longer reaction times whereas higher temperatures require shorter reaction times.

The dehydrochlorination reaction can be conducted in the presence of such solvents as alcohols, aromatic hydrocarbons, aliphatic ethers, aromatic ethers, polyethers, ketones, chlorobenzenes, chlorinated epoxides, and any combination thereof. Particularly suitable solvents include, for example, methanol, ethanol, n-propanol, isopropanol, n-butanol, toluene, benzene, xylene, methyl isobutyl ketone, 2-ethoxy-1-propanol, dimethoxy ethane, dimethoxypropane, trimethoxypropane, dichlorobenzenes, methylene chloride, acetone, methyl ethyl ketone, epichlorohydrin, and any combination thereof.

In step (4), the product resulting from dehydrochlorinating the reaction product obtained from reacting the epichlorohydrin and first intermediate product can be recovered from the reaction mixture by any suitable means such as vacuum stripping, rotary evaporation, and thin film evaporation.

The reaction between the first intermediate product and the epichlorohydrin and dehydrochlorination of the resultant product can be conducted by the procedures disclosed by in U. S.-A-4,499,255.

U.S.-A-4,499,255 discloses a process for preparing epoxy resins by reacting an aromatic hydroxyl group containing compounds with epihalohydrin in the presence of an alkali metal hydroxide; characterized by (1) conducting the reaction in the presence of an organic solvent which codistills with water and said epihalohydrin at a boiling point below the boiling point of the lowest boiling compound among the components in the reaction mixture; (2) conducting the reaction at a temperature and a reduced pressure sufficient to provide a distillate with a boiling point of from 45°C to 80°C; (3) employing said alkali metal hydroxide as an aqueous solution and adding said aqueous alkali metal hydroxide in a continuous or intermittent manner over a period of from 0.5 to 10 hours; (4) continuously removing water by means of codistillation at a rate such that the water content of the reaction mixture is less than 6 percent by weight; and (5) separating the water from the codistillate and returning the solvent and epihalohydrin to the reaction mixture.

The chlorinated epoxy resins of the present invention can be cured with any suitable curing agent for epoxy resins including aliphatic or aromatic primary and secondary polyamines, carboxylic acids and anhydrides thereof, phenolic hydroxyl-containing compounds, guanidines, biguanides, urea-aldehyde resins, melamine-aldehyde resins, alkoxylated urea-aldehyde resins, alkoxylated melamine-aldehyde resins, and combinations thereof. Particularly suitable curing agents include, for example, diethylenetriamine, diethylenetetramine, diamino cyclohexane, methylenedianiline, maleic anhydride, and combinations thereof. The curing agents are employed in an amount which will effectively cure the composition containing the chlorinated epoxy resin. These amounts will depend upon the particular modified epoxy resin and curing agent employed. The Handbook of Epoxy Resins by Lee and Neville, McGraw-Hill, 1967, contains various discussions concerning the curing of epoxy resins as well as compilation of suitable curing agents.

The compositions of the present invention containing epoxy resins and curing agents can be cured at any suitable temperature which will cause the reactants to become thermoset, i.e., insoluble and infusable. Different curing agents will require different temperatures and cure schedules.

The chlorinated epoxy resins of the present invention can be blended with other materials such as solvents or diluents, fillers, pigments, dyes, flow modifiers, thickeners, reinforcing agents, surfactants, and combinations thereof.

Solvents or diluents which can be employed herein include, for example, aliphatic hydrocarbons, ketones, glycol ethers, aromatic hydrocarbons, chlorinated aliphatic hydrocarbons, chlorinated aromatic hydrocarbons, aliphatic ethers, aromatic ethers, and combinations thereof. Particularly suitable solvents or diluents include, for example, toluene, benzene, xylene, methyl ethyl ketone, methyl isobutyl ketone, diethylene glycol methyl ether, dipropylene glycol methyl ether, dimethoxy ethane, dimethoxy propane, methoxy benzene, acetone, methylene dichloride, dichlorobenzenes, and combinations thereof.

The following examples are illustrative of the invention.

### Example 1

A mixture of 400 grams (1.18 equiv.) of liquid epoxy resin (a diglycidyl ether of bisphenol A having an epoxide equivalent weight, EEW, of 185 and 0.02 weight percent hydrolyzable chlorine and 0.14 percent, by weight, bound chlorine), 400 grams of toluene, 50 grams of water and 50 grams of methanol were mixed together at 60°C until an emulsion forms. Concentrated HCl (37 percent by weight in water) was titrated into the mixture at a rate of 0.5 cc per minute for five minutes, or until a 2°C exotherm was observed. The HCl feed was intermittently terminated until the reaction temperature dropped back to 50°C, then HCl titration was resumed. This process was repeated until all the epoxy groups were hydrochlorinated, and the resin species were primarily in the dichlorohydrin form.

The resin was stripped free of water, methanol, toluene and HCl on a rotary evaporator at 185°C and pressure of 2 mm Hg (abs.) for two hours. The pure resin was dissolved in toluene to 30 percent resin (by weight) and 1.06 grams of stannic chloride (SnCl₄) was added to the mixture as a coupling catalyst.
Epichlorohydrin was titrated into the reaction mixture until a total of 104 grams were in the reaction. The reaction time was 2.5 hours. A 15 minute digest time was added for a total of 2.75 hours; then the mixture was water washed to remove SnCl₄ catalyst. The reaction temperature was maintained below 60°C and above 40°C using the reaction exotherm.

The resulting reaction solution was once again rotary evaporated to remove volatiles and solvents.

The pure neat resin was dissolved in 1000 grams of a mixture of 90 percent epichlorohydrin and 10 percent propylene glycol methyl ether, and epoxidized at 65°C and 26.66 kN/m² (200 mm Hg (abs.)) pressure using 158.0 grams of 50 percent aqueous NaOH solution over a two hour time period.

The resulting solid salt phase from the epoxidation was filtered from the resin solution and discarded. The resin solution was washed with 200 mls of deionized water and rotary evaporated as before until pure resin was obtained.

The final resin product contained 450 ppm hydrolyzable chlorides and 2.17 percent (by weight) bound (non-hydrolyzable, aliphatic) chlorine. The theoretical amount of bound (non-hydrolyzable, aliphatic) chlorine for this example, which corresponds to formula II wherein A is an isopropylidine group, R is H, X is H, n has a value of 1 and n′ has a value of 1, was 9.98 percent by weight.

### Example 2

A mixture of 340.2 grams (1 equiv.) of liquid epoxy resin (a diglycidyl ether of bisphenol A having an epoxide equivalent weight, EEW, of 185 and 0.02 weight percent hydrolyzable chlorine and 0.14 percent, by weight, bound chlorine), 400 grams of toluene, 50 grams of water and 50 grams of methanol were mixed together at 30°C until an emulsion formed. Concentrated HCl (37 percent by weight in water) was titrated into the mixture at a rate of 0.5 cc per minute for five minutes, or until a 2°C exotherm was observed. The HCl feed was intermittently terminated until the reaction temperature dropped back to 30°C, then HCl titration was resumed. This process was repeated until all the epoxy groups were hydrochlorinated, and the resin species were primarily in the dichlorohydrin form. A total of 183.6 grams of 37 percent HCl was used.

The resin was stripped free of water, methanol, toluene and HCl on a rotary evaporator at 185°C and pressure of 2 mm Hg (abs.) for two hours. The pure resin (413 grams) was dissolved in toluene to 30 percent resin (by weight) and 2 grams of stannic chloride (SnCl₄) was added to the mixture as a coupling catalyst. Epichlorohydrin was titrated into the reaction mixture until a total of 148 grams were in the reaction. The reaction time was 2.5 hours. A 15 minute digest time was added for a total of 2.75 hours; then the mixture was water washed to remove SnCl₄ catalyst. The reaction temperature was maintained below 60°C and above 40°C using the reaction exotherm.

The resulting reaction solution was once again rotary evaporated to remove volatiles and solvents.

The pure neat resin was dissolved in 1000 grams of a mixture of 90 percent epichlorohydrin and 10 percent propylene glycol methyl ether, and epoxidized at 65°C and 26.66 kN/m² (200 mm Hg (abs.)) pressure using 158.0 grams of 50 percent aqueous NaOH solution over a two hour time period.

The resulting solid salt phase from the epoxidation was filtered from the resin solution and discarded. The resin solution was washed three times with 200 mls of deionized water, phase separated and rotary evaporated as before until pure resin was obtained.

The final resin product contained 358 ppm hydrolyzable chlorides and 9.4 percent (by weight) bound (non-hydrolyzable, aliphatic) chlorine. The theoretical amount of bound (non-hydrolyzable, aliphatic) chlorine for this example, which corresponds to formula II wherein A is an isopropylidine group, R is H, X is H, n has a value of 1 and n′ has a value of 1, was 9.98 percent by weight.

## Claims

1. A process for the preparation of an epoxy resin having aliphatic, non-hydrolyzable chloride which comprises:
(1) hydrochlorinating an epoxy resin having no aliphatic, non-hydrolyzable chloride with a hydrochlorinating agent in the presence of one or more non-reactive solvents thereby producing a first chlorohydrin intermediate product;
(2) reacting the resultant chlorohydrin product from step (1) with epichlorohydrin in the presence of one or more Lewis acid catalysts and in the presence of one or more non-reactive solvents thereby producing a second chlorohydrin intermediate product;
(3) recovering the second intermediate product formed in step (2), dissolving the recovered second chlorohydrin intermediate product in one or more non-reactive solvents, and dehydrochlorinating said second chlorohydrin intermediate product with one or more dehydrochlorinating agents; and
(4) recovering the resultant aliphatic, non-hydrolyzable chlorine-containing epoxy resin product.

2. A process of Claim 1, wherein the epoxy resin having no aliphatic, non-hydrolyzable chloride is represented by the following formulas I or II 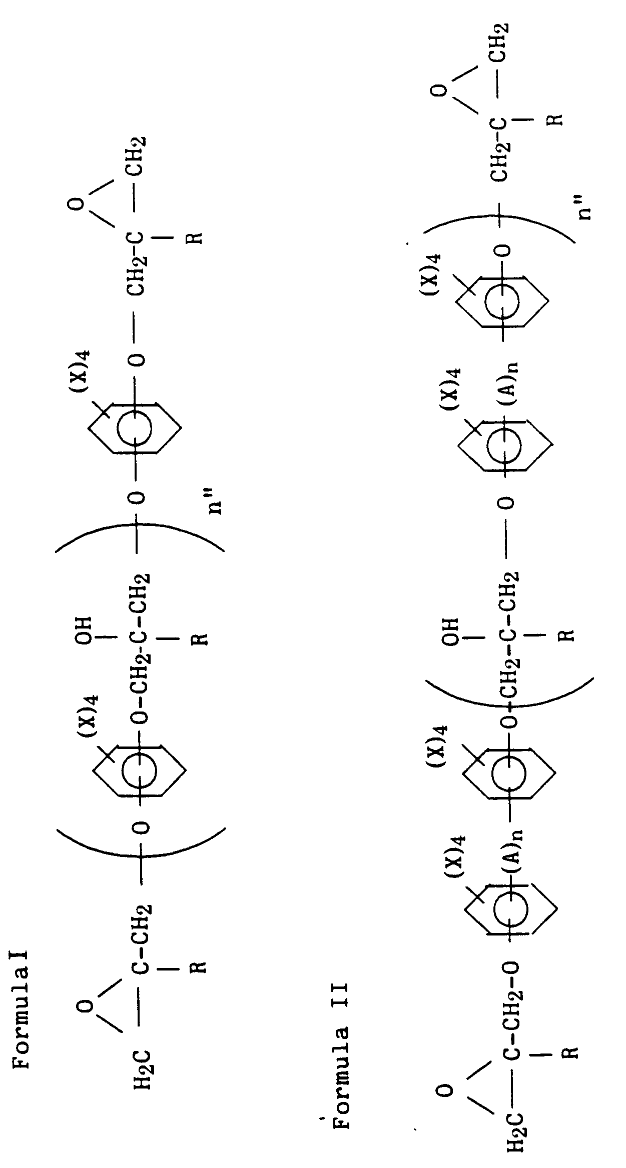 wherein each A is independently a divalent hydrocarbyl group having from 1 to 12 carbon atoms, -O-, -S-, -S-S-, -S-O-, -SO₂-, or -CO-; each R is independently hydrogen or an alkyl group having from 1 to 3 carbon atoms; each X is independently hydrogen, a hydrocarbyl or hydrocarbyloxy group having from 1 to 12 carbon atoms or a halogen atom; n has a value of zero or 1; n˝ has an average value from zero to 20.

3. A process of Claim 1, wherein
(1) the hydrochlorination is conducted at from 0°C to 100°C for from 0.1 to 24 hours;
(2) the reaction of the first chlorohydrin intermediate product and epichlorohydrin is conducted at 0°C to 100°C for from 0.5 to 24 hours; and
(3) the dehydrochlorination is conducted at from 30°C to 90°C for from 0.5 to 24 hours.

4. A process of Claim 3, wherein the Lewis acid is stannic chloride, boron trifluoride etherate, boron trifluoride, stannous chloride, aluminum chloride or any combination thereof.

5. A process of Claim 1, wherein
(a) the hydrochlorinating agent is hydrogen chloride;
(b) the solvent employed in the hydrochlorination step (1) is a mixture of toluene and methanol;
(c) the coupling reaction, step (2), is conducted in the presence of stannic chloride as the catalyst;
(d) the solvent employed in step (2) is toluene;
(e) the solvent employed in the dehydrohalogenation reaction, step (3) is a mixture of epichlorohydrin and propylene glycol methyl ether; and
(f) the dehydrohalogenation agent is sodium hydroxide.

6. An epoxy resin containing aliphatic, non-hydrolyzable chloride produced by the process of Claim 1

7. An epoxy resin mixture comprising
(A) an epoxy resin containing aliphatic, non-hydrolyzable chloride produced by the process of Claim 2; and
(B) an epoxy resin containing no aliphatic, non-hydrolyzable chloride represented by formulas I or II of Claim 2.
wherein components (A) and (B) are present in quantities such that the mixture contains from 0.2 to 10 percent aliphatic, non-hydrolyzable chloride by weight.

8. A curable composition comprising the epoxy resin produced by the process of Claim 1 and a curing quantity of one or more curing agents or curing catalysts therefor.

9. A curable composition of Claim 8, wherein said curing agent or curing catalyst is an aliphatic or aromatic primary amine, a biguanide, a guanidine, a polyamide, a dicarboxylic acid anhydride, or any combination thereof.

10. The product resulting from curing the curable composition of Claim 8.

## Patentansprüche

1. Verfahren zum Herstellen eines Epoxyharzes mit aliphatischem, nicht hydrolysierbarem Chlorid, umfassend:
(1) Hydrochlorieren eines Epoxyharzes, welches kein aliphatisches, nicht hydrolysierbares Chlorid enthält, mit einem Hydrochlorierungsmittel in der Gegenwart eines oder mehrerer nicht reaktiver Lösungsmittel, wobei ein erstes Chlorhydrinzwischenprodukt erzeugt wird;
(2) Umsetzen des resultierenden Chlorhydrinprodukts aus Schritt (1) mit Epichlorhydrin in der Gegenwart von einem oder mehreren Lewis-Säurekatalysatoren und in der Gegenwart eines oder mehrerer nicht reaktiver Lösungsmittel, wobei ein zweites Chlorhydrinzwischenprodukt erzeugt wird;
(3) Rückgewinnen des zweiten, in Schritt (2) gebildeten Zwischenprodukts, Lösen des rückgewonnen zweiten Chlorhydrinzwischenprodukts in einem oder mehreren nicht reaktiven Lösungsmitteln und Dehydrochlorieren des zweiten Chlorhydrinzwischenprodukts mit einem oder mehreren Dehydrochlorierungsmitteln und
(4) Rückgewinnen des resultierenden aliphatisches, nicht hydrolysierbares Chlor enthaltenden Epoxyharzproduktes.

2. Verfahren nach Anspruch 1, worin das Epoxyharz mit nicht aliphatischem, nicht hydrolysierbarem Chlorid durch die folgenden Formeln I oder II dargestellt wird 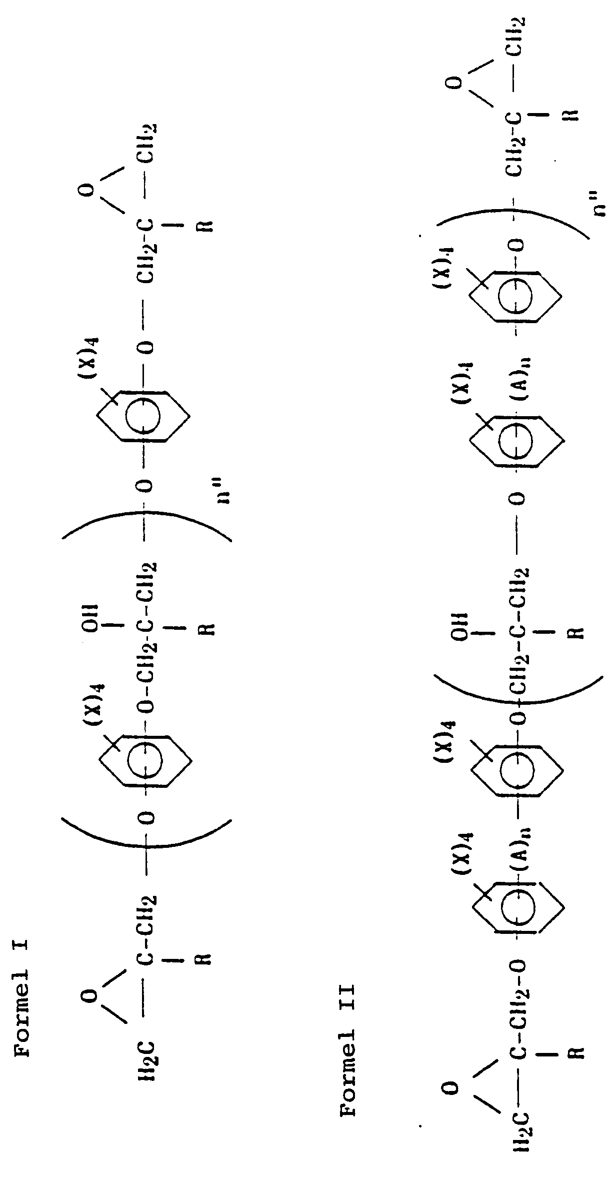 worin jedes A unabhängig eine bivalente Hydrocarbylgruppe mit 1 bis 12 Kohlenstoffatomen, -O-, -S-, -S-S-, -S-O-, -SO₂- oder -CO- ist; jedes R unabhängig Wasserstoff oder eine Alkylgruppe mit 1 bis 3 Kohlenstoffatomen ist; jedes X unabhängig Wasserstoff, eine Hydrocarbyl- oder Hydrocarbyloxygruppe mit 1 bis 12 Kohlenstoffatomen oder ein Halogenatom ist; n einen Wert von Null oder 1 hat; n'' einen durchschnittlichen Wert von Null bis 20 hat.

3. Verfahren nach Anspruch 1, worin
(1) die Hydrochlorierung bei 0°C bis 100°C für 0,1 bis 24 Stunden durchgeführt wird;
(2) die Reaktion von dem ersten Chlorhydrinzwischenprodukt und Epichlorhydrin bei 0°C bis 100°C für 0,5 bis 24 Stunden durchgeführt wird; und
(3) die Dehydrochlorierung bei 30°C bis 90°C für 0,5 bis 24 Stunden durchgeführt wird.

4. Verfahren nach Anspruch 3, worin die Lewis-Säure Zinn(IV)chlorid, Bortrifluoridetherat, Bortrifluorid, Zinn(II)chlorid, Aluminiumchlorid oder eine beliebige Kombination davon ist.

5. Verfahren nach Anspruch 1, worin
(a) das Hydrochlorierungsmittel Chlorwasserstoff ist;
(b) das im Hydrochlorierungsschritt (1) verwendete Lösungsmittel ein Gemisch von Toluol und Methanol ist;
(c) die Kupplungsreaktion, Schritt (2), in der Gegenwart von Zinn(IV)chlorid als Katalysator durchgeführt wird;
(d) das im Schritt (2) verwendete Lösungsmittel Toluol ist;
(e) das in der Dehydrohalogenierungsreaktion, Schritt (3) verwendete Lösungsmittel ein Gemisch von Epichlorhydrin und Propylenglykolmethylether ist und
(f) das Dehydrohalogenierungsmittel Natriumhydroxid ist.

6. Aliphatisches, nicht hydrolysierbares Chlorid enthaltendes Epoxyharz, welches durch das Verfahren von Anspruch 1 erzeugt wurde.

7. Epoxyharzgemisch, umfassend
(A) ein, aliphatisches, nicht hydrolysierbares Chlorid enthaltendes Epoxyharz, welches durch das Verfahren von Anspruch 2 erzeugt wurde und
(B) ein, kein aliphatisches, nicht hydrolysierbares Chlorid enthaltendes Epoxyharz, wie in Formeln I oder II von Anspruch 2 dargestellt,
worin die Komponenten (A) und (B) in derartigen Mengen vorliegen, daß das Gemisch bezüglich des Gewichts von 0,2 bis 10 Prozent aliphatisches, nicht hydrolysierbares Chlorid enthält.

8. Eine vernetzbare Zusammensetzung, umfassend das durch das Verfahren von Anspruch 1 erzeugte Epoxyharz und eine vernetzende Menge von einem oder mehreren Vernetzungsmitteln oder Vernetzungskatalysatoren hierfür.

9. Vernetzbare Zusammensetzung nach Anspruch 8, worin das Vernetzungsmittel oder der Vernetzungskatalysator ein aliphatisches oder aromatisches primäres Amin, ein Biguanid, ein Guanidin, ein Polyamid, ein Dicarbonsäureanhydrid oder eine beliebige Kombination davon ist.

10. Produkt, welches aus dem Vernetzen der vernetzbaren Zusammensetzung nach Anspruch 8 resultiert.

## Revendications

1. Procédé de préparation d'une résine époxyde contenant des groupes chloro-aliphatiques non hydrolysables consistant à
(1) hydrochlorer une résine époxyde ne contenant pas de groupes chloro-aliphatiques non hydrolysables à l'aide d'un agent d'hydrochloration en présence d'un ou de plusieurs solvants non réactifs, produisant ainsi un premier produit intermédiaire de type chlorhydrine;
(2) faire réagir le produit de type chlorhydrine, obtenu dans l'étape (1), avec l'épichlorhydrine en présence d'un ou de plusieurs catalyseurs de type acide de Lewis et en présence d'un ou de plusieurs solvants non réactifs, produisant ainsi un second produit intermédiaire de type chlorhydrine;
(3) récupérer le second produit intermédiaire formé dans l'étape (2), dissoudre le second produit intermédiaire de type chlorhydrine récupéré dans un ou plusieurs solvants non réactifs et déhydrochlorer ledit second produit intermédiaire de type chlorhydrine à l'aide d'un ou de plusieurs agents de déhydrochloration, et
(4) récupérer le produit de résine époxyde contenant des groupes chloro-aliphatiques non hydrolysables obtenu.

2. Procédé conforme à la revendication 1 dans lequel la résine époxyde ne contenant pas de groupes chloro-aliphatiques non hydrolysables est représentée par les formules I ou II suivantes : 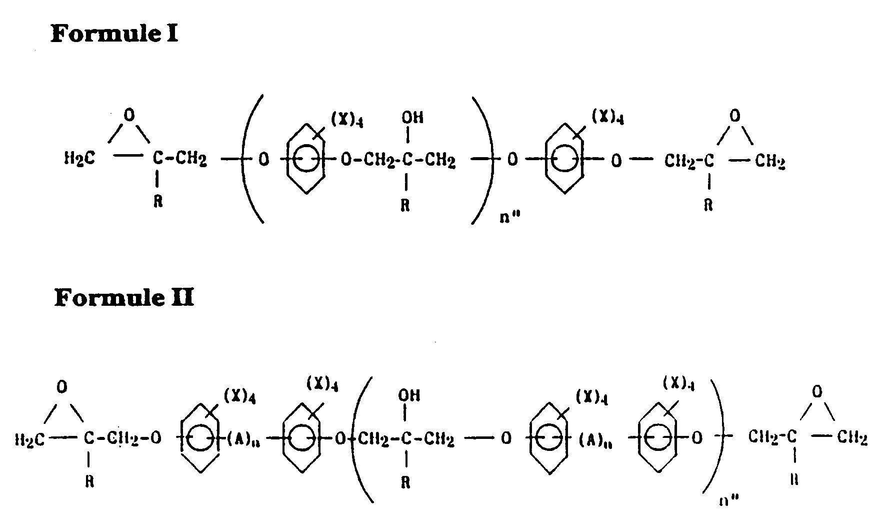 dans lesquelles chaque A représente indépendamment un groupe hydrocarboné divalent comportant de 1 à 12 atomes de carbone, un groupe -O-, -S-, -S-S-, -O-S-, -SO₂- ou -CO-, chaque R représente indépendamment un atome d'hydrogène ou un groupe alkyle comportant de 1 à 3 atomes de carbone, chaque X représente indépendamment un atome d'hydrogène, un groupe hydrocarboné ou oxy-hydrocarboné comportant de 1 à 12 atomes de carbone ou un atome d'halogène, n est égal à 0 ou 1 et la valeur moyenne de n'' est comprise entre 0 et 20.

3. Procédé conforme à la revendication 1 dans lequel
(1) l'hydrochloration est réalisée à une température de 0 °C à 100 °C pendant 0,1 à 24 heures,
(2) la réaction du premier produit intermédiaire de type chlorhydrine avec l'épichlorhydrine est réalisée à une température de 0 °C à 100 °C pendant 0,5 à 24 heures,
(3) la déhydrochloration est réalisée à une température comprise entre 30 °C et 90 °C pendant 0,5 à 24 heures.

4. Procédé conforme à la revendication 3 dans lequel l'acide de Lewis est le chlorure stannique, le complexe trifluorure de bore-éther, le trifluorure de bore, le chlorure stanneux, le chlorure d'aluminium ou une quelconque combinaison de ceux-ci.

5. Procédé conforme à la revendication 1 dans lequel
(a) l'agent d'hydrochloration est l'acide chlorhydrique,
(b) le solvant utilisé dans l'étape d'hydrochloration (1) est un mélange de toluène et de méthanol,
(c) la réaction de couplage, l'étape (2) est réalisée en présence d'un catalyseur qui est le chlorure stannique,
(d) le solvant utilisé dans l'étape (2) est le toluène,
(e) le solvant utilisé dans la réaction de déhydrohalogénation, l'étape (3) est un mélange d'épichlorhydrine et d'oxyde de propylèneglycol et de méthyle, et
(f) l'agent de déhydrohalogénation est l'hydroxyde de sodium.

6. Résine époxyde contenant des groupes chloro-aliphatiques non hydrolysables préparée par le procédé conforme à la revendication 1.

7. Mélange de résines époxyde contenant
(A) une résine époxyde contenant des groupes chloro-aliphatiques non hydrolysables préparée par le procédé de la revendication 2, et
(B) une résine époxy ne contenant pas de groupes chloro-aliphatiques non hydrolysables, représentée par les formules I ou II de la revendication 2,
dans lequel les composants (A) et (B) sont présents en des quantités telles que le mélange contient de 0,2 à 10% enpoids de chlore sous forme de groupes chloro-aliphatiques non hydrolysables.

8. Composition durcissable contenant la résine époxyde préparée par le procédé conforme à la revendication 1 et une quantité d'un ou de plusieurs agents ou catalyseurs de durcissement suffisante pour la faire durcir.

9. Composition durcissable conforme à la revendication 8, dans laquelle ledit agents ou catalyseur de durcissement est une amine primaire aliphatique ou aromatique, un biguanide, une guanidine, un polyamide, un anhydride d'un acide dicarboxylique ou une quelconque combinaison de ceux-ci.

10. Produit obtenu par durcissement de la composition durcissable de la revendication 8.
